# EUROPÄISCHE PATENTANMELDUNG

(11) **EP 1 655 199 A1**
(43) Veröffentlichungstag der Anmeldung: **10.05.2006**
(21) Anmeldenummer: 05023019.2
(22) Anmeldetag: 21.10.2005
(51) Int. Cl.: B62D 1/10

(54) **Fahrzeuglenkrad mit feststehendem Airbag-Modul**

(30) Priorität: 08.11.2004 DE 102004053798; 14.07.2005 DE 102005032953
(71) Anmelder: TRW Automotive Safety Systems GmbH, 63743 Aschaffenburg (DE)
(72) Erfinder: Fäth, Stefan, 63743 Aschaffenburg (DE); Hirzmann, Guido, 63877 Sailauf (DE); Neumann, Rene, 61273 Wehrheim (DE)
(74) Vertreter: Strass, Jürgen

(57) **Zusammenfassung**

Ein Fahrzeuglenkrad (10) umfaßt eine drehfest an eine Lenksäule (18) gekoppelte Nabe (16) und einen mittels einer Halteeinrichtung in Ruhestellung festgehaltenen Mittelteil (20). Die Halteeinrichtung umfaßt eine schraubenartig gewundene Spirale (22). Der festgehaltene Mittelteil (20) umfaßt ein Airbagmodul. Auf der Spirale (22) sind elektrische Leitungen aufgebracht.

## Beschreibung

Die Erfindung betrifft ein Fahrzeuglenkrad mit einer drehfest an eine Lenksäule gekoppelten Nabe und einem mittels einer Halteeinrichtung in Ruhestellung festgehaltenen Mittelteil, wobei die Halteeinrichtung eine schraubenartig gewundene Spirale umfaßt.

Lenkräder mit einem feststehenden Mittelteil haben grundsätzlich den Vorteil, daß am Mittelteil angeordnete Bedienelemente unabhängig von der Lenkradstellung immer an der gleichen Stelle zu finden sind. Auf dem feststehenden Mittelteil kann ein Airbagmodul mit einem Airbag vorgesehen werden, der nicht mehr notwendigerweise symmetrisch zum Drehzentrum der Lenkachse gestaltet sein muß. Da die Orientierung des sich aus dem feststehenden Airbagmodul entfaltenden Airbags von vornherein feststeht, können asymmetrische Airbagformen mit optimierten Rückhalteeigenschaften eingesetzt werden.

Ein Lenkrad der eingangs genannten Art mit einer torsionssteifen Spirale zum fahrzeugfesten Halten eines Lenkradmittelteils ist aus der EP 0 314 887 A1 bekannt. Bei der Anbringung eines Airbagmoduls auf dem feststehenden Mittelteil ist die Verkabelung des Airbagmoduls allgemein problematisch im Vergleich zu herkömmlichen Lenkrädern, bei denen sich das Airbagmodul mit dem Lenkrad mitdreht. Die bisherigen Versuche zur Bereitstellung einer zuverlässigen Verkabelung sind sehr aufwendig und benötigen einen verhältnismäßig großen Bauraum.

Die Erfindung schafft ein Fahrzeuglenkrad mit feststehendem Mittelteil, das die Vorteile eines ortsfesten Airbags bietet und bei dem eine sichere und platzsparende elektrische Anbindung des Airbagmoduls gewährleistet ist.

Gemäß der Erfindung ist hierzu bei einem Lenkrad der eingangs genannten Art vorgesehen, daß der festgehaltene Mittelteil ein Airbagmodul umfaßt und auf der Spirale elektrische Leitungen aufgebracht sind. Die Erfindung macht sich die Spirale selbst als Träger für die erforderlichen elektrischen Leitungen zunutze, so daß auf separate Kabelstränge mit komplizierten Führungen verzichtet werden kann. Die Spirale kann alleine eine mechanische Verbindung zwischen einem fahrzeugfesten Befestigungspunkt (z.B. Lenkstock) und dem feststehenden Mittelteil des Lenkrads darstellen, die gemäß der Erfindung auf eine elektrische Verbindung erweitert wird. In Einklang mit der Erfindung werden verschiedene Möglichkeiten vorgestellt, elektrische Leitungen auf der Spirale aufzubringen.

Eine bevorzugte Ausführungsform der Erfindung sieht vor, daß die Spirale ein in MID-Technik hergestelltes Kunststoffteil mit metallisierten Leiterbahnen ist. Die Ausbildung der Spirale als MID-(Molded Interconnect Device) Bauteil erlaubt es, unter bestmöglicher Bauraum- und Gewichtseinsparung die mechanische Halterung und die elektrische Verkabelung des Airbagmoduls in einem Bauteil zu vereinen.

Alternativ kann eine Folie mit Leiterbahnen auf den Windungen befestigt werden.

Weitere bevorzugte Ausführungsformen ergeben sich aus den Unteransprüchen.

Weitere Merkmale und Vorteile der Erfindung ergeben sich aus der nachfolgenden Beschreibung einer bevorzugten Ausführungsform und aus den beigefügten Zeichnungen, auf die Bezug genommen wird. In den Zeichnungen zeigen:
- Figur 1 einen Schnitt durch ein erfindungsgemäßes Lenkrad;
- Figur 2 eine perspektivische Ansicht einer Spirale gemäß einer ersten Ausführungsform der Erfindung;
- Figur 3 einen Schnitt durch einen Teil einer Spirale gemäß einer zweiten Ausführungsform der Erfindung;
- Figur 4 einen Schnitt durch einen Teil einer Spirale gemäß einer dritten Ausführungsform der Erfindung;
- Figur 5 eine Detailvergrößerung aus Figur 4;
- Figur 6 einen Schnitt durch einen Teil einer Spirale gemäß einer dritten Ausführungsform; und
- Figur 7 eine Detailvergrößerung aus Figur 6.

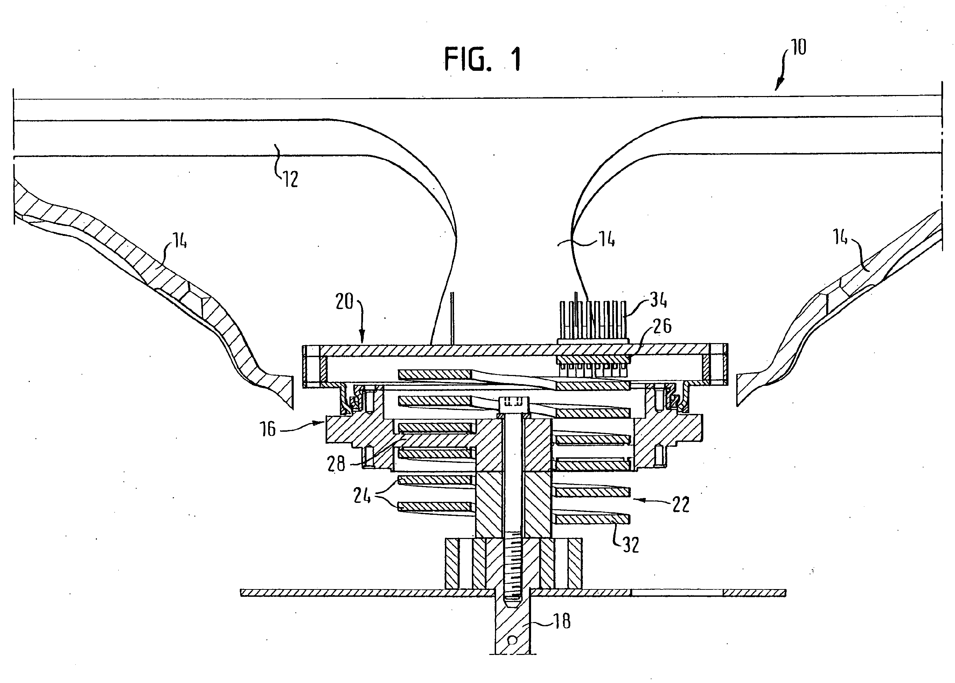

In Figur 1 ist ein Lenkrad 10 mit einem Lenkradkranz 12, Speichen 14, und einer Nabe 16 dargestellt, die drehfest mit einer Lenksäule 18 verbunden ist. Das Lenkrad 10 weist ferner einen relativ zur Nabe 16 drehbaren Mittelteil 20 auf, auf dem ein Airbagmodul (nicht gezeigt) angebracht ist.

Eine torsionssteife, schraubenartig gewundene Spirale 22 ist koaxial zur Lenksäule 18 angeordnet. Die in axialer Richtung elastische Spirale 22 weist mehrere Windungen 24 mit gleichem Durchmesser auf, die einen allgemein rechteckförmigen Querschnitt haben. Ein oberes Ende 26 der Spirale 22 ist fest mit dem Mittelteil 20 verbunden, während das untere Ende 32 fahrzeugfest ist, z.B. durch mechanische Anbindung an einen Lenkstock (nicht gezeigt). Der Boden 28 der Nabe 16 weist eine axiale Durchtrittsöffnung für einen Windungsbereich der Spirale 22 auf. Der Boden 28 der Nabe 16 greift zwischen zwei Windungen 24 ein.

Bei einer Drehung des Lenkrads 10 hält die torsionssteife Spirale 22 den Mittelteil 20 mit dem Airbagmodul in seiner Ausgangslage fest. Je nach Drehrichtung wird dabei der Abschnitt zwischen dem Nabenboden 28 und dem Mittelteil 20 oder der Abschnitt zwischen dem Nabenboden 28 und dem Lenkstock axial gestaucht.

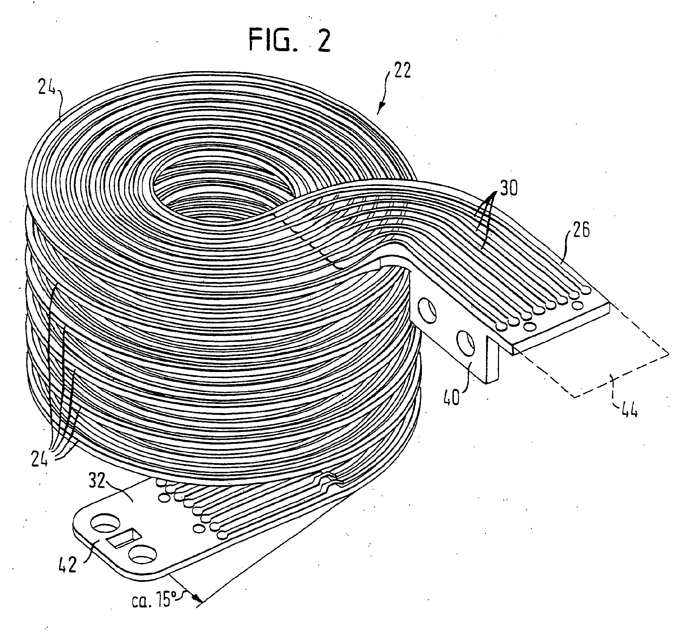

Die Spirale 22 sorgt neben der fahrzeugfesten Halterung des Lenkradmittelteils 20 auch für die elektrische Anbindung des Airbagmoduls. In Figur 2 ist eine erste Ausführungsform der Spirale 22 mit mehreren Leiterbahnen 30 gezeigt, die auf den Windungen 24 parallel von einem bis zum anderen Ende der Spirale 22 verlaufen. Am oberen Ende 26 der Spirale 22 sind die Leiterbahnen 30 mit Anschlußstiften 34 verbunden (siehe Figur 1), auf die ein entsprechender Steckverbinder des Airbagmoduls aufgesteckt wird. Aus Figur 2 geht noch hervor, daß die Windungen 24 der Spirale 22 einen allgemein rechteckförmigen Querschnitt haben, wobei mehrere nebeneinanderliegende und parallel zueinander verlaufende Nuten gebildet sind.

Wie in Figur 2 gezeigt, können die an den Enden 26, 32 der Spirale 22 vorgesehenen Befestigungslaschen 40, 42 in den gestrichelten Bereich 44 verlagert bzw. geneigt ausgebildet werden.

Die Leiterbahnen 30 können alternativ auch durch Aufkleben einer entsprechenden Folie auf die Windungen 24 der Spirale 22 aufgebracht werden.

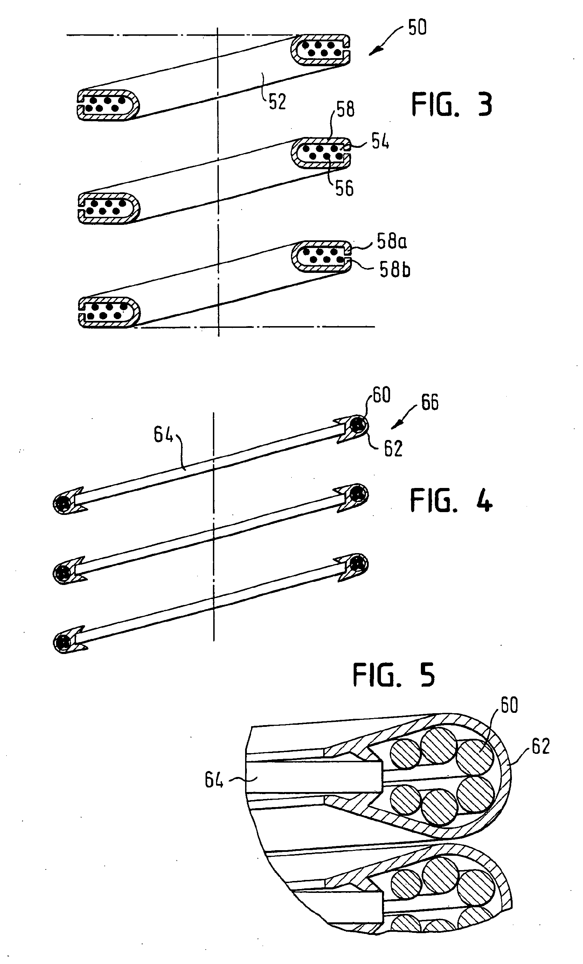

In Figur 3 ist eine zweite Ausführungsform der Spirale 50 gezeigt, die grundsätzlich aus Metall oder Kunststoff gefertigt sein kann. Die Windungen 52 der Spirale 50 weisen einen durchgängigen Hohlraum 54 auf, in dem elektrische Verbindungsleitungen 56 aufgenommen und vom fahrzeugseitigen Anschluß zum feststehenden Mittelteil geführt sind. Die Wandung 58 des Hohlraums 54 ist auf der Außenseite der Spirale 50 nicht geschlossen. Durch Aufbiegen der gegenüberliegenden Wandungsabschnitte 58a, 58b ist der Hohlraum 54 von außen zugänglich. Grundsätzlich ist es auch möglich, den Hohlraum 54 von einer anderen Seite zugänglich zu machen. Die Verbindungsleitungen 56 können somit auf einfache Weise (vorzugsweise von der Außenseite der Spirale 50) in den Hohlraum 54 eingeclipst werden.

Bei der in den Figuren 4 und 5 gezeigten dritten Ausführungsform sind elektrische Leitungen 60 mit Hilfe von mehreren Kabelclipsen 62 am Außenumfang der Windungen 64 der Spirale 66 befestigt. Die Kabelclipse 62 können wahlweise aber auch am Innenumfang der Windungen 64 befestigt werden. Die Spirale 66 kann wie bei der zweiten Ausführungsform grundsätzlich aus Metall oder Kunststoff bestehen.

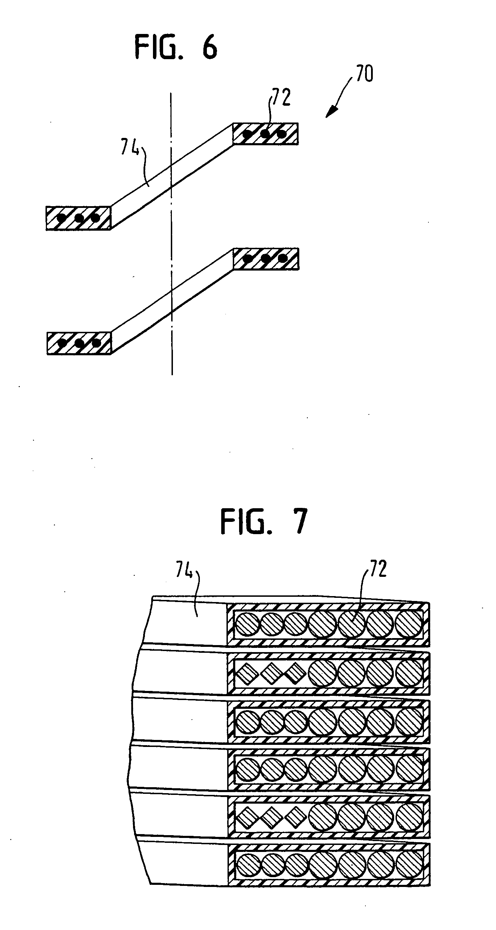

Die Figuren 6 und 7 zeigen schließlich eine Spirale 70 mit Windungen 74 aus Kunststoff, bei der elektrische Leitungen 72 bei der Herstellung der Spirale 70 umspritzt oder umgossen wurden.

## Patentansprüche

1. Fahrzeuglenkrad (10) mit einer drehfest an eine Lenksäule (18) gekoppelten Nabe (16) und einem mittels einer Halteeinrichtung in Ruhestellung festgehaltenen Mittelteil (20), wobei die Halteeinrichtung eine schraubenartig gewundene Spirale (22; 50; 66; 70) umfaßt, **dadurch gekennzeichnet, daß** der festgehaltene Mittelteil (20) ein Airbagmodul umfaßt und auf der Spirale (22; 50; 66; 70) elektrische Leitungen (30; 56; 60; 72) aufgebracht sind.

2. Fahrzeuglenkrad nach Anspruch 1, **dadurch gekennzeichnet, daß** die Spirale (22) ein in MID-Technik hergestelltes Spritzgußteil mit metallisierten Leiterbahnen (30) ist.

3. Fahrzeuglenkrad nach Anspruch 1, **dadurch gekennzeichnet, daß** eine Folie mit Leiterbahnen auf den Windungen (24) der Spirale (22) befestigt ist.

4. Fahrzeuglenkrad nach Anspruch 1, **dadurch gekennzeichnet, daß** die Windungen (52) der Spirale (50) einen durchgehenden Hohlraum (54) aufweisen, in dem elektrische Verbindungsleitungen (56) aufgenommen sind.

5. Fahrzeuglenkrad nach Anspruch 4, **dadurch gekennzeichnet, daß** der Hohlraum (54) von einer Seite der Spirale (50) zugänglich ist.

6. Fahrzeuglenkrad nach Anspruch 1, **dadurch gekennzeichnet, daß** elektrische Leitungen (60) mit Hilfe von Kabelclipsen (62) an den Windungen (64) der Spirale (66) angebracht sind.

7. Fahrzeuglenkrad nach Anspruch 1, **dadurch gekennzeichnet, daß** die Windungen (74) der Spirale (70) umspritzte oder umgossene elektrische Leitungen (72) umfassen.
